# EUROPEAN PATENT APPLICATION

(11) **EP 2 017 816 A2**
(43) Date of publication of application: **21.01.2009**
(21) Application number: 08009422.0
(22) Date of filing: 21.05.2008
(51) Int. Cl.: G09G 3/36, H04N 7/01

(54) **Apparatus for and method of displaying video signals**

(30) Priority: 21.05.2007 JP 2007134560; 11.04.2008 JP 2008103289; 11.04.2008 JP 2008103290
(71) Applicant: Victor Company of Japan Ltd., Yokohama-shi Kanagawa-ken (JP)
(72) Inventor: Shishido, Tomoyuki, Yokohama-shi Kanagawa-ken (JP); Aiba, Hideki, Yokohama-shi Kanagawa-ken (JP)
(74) Representative: Carstens, Dirk Wilhelm

(57) **Abstract**

An apparatus for displaying video signals includes an input source (23) to receive video signals having different frame frequencies and provide an input video signal from among the received video signals, a frame frequency detector (5) to detect, as a first frame frequency, the frame frequency of the input video signal, a determiner (6) to determine a second frame frequency according to the first frame frequency and provide a frame frequency conversion rate (K), the second frame frequency being higher than the first frame frequency, an interpolation frame generator (7) to generate interpolation frames according to the frame frequency conversion rate, and a frame frequency converter (8) to convert the input video signal into a video signal having the second frame frequency by interpolating the generated interpolation frames between original frames of the input video signal.

## Description

### BACKGROUND OF THE INVENTION

### 1. Field of the Invention

The present invention relates to an apparatus for and a method of converting an input video signal having an original frame frequency into a video signal having a frame frequency higher than the original frame frequency and displaying the converted video signal on a display such as a liquid crystal display.

### 2. Description of Related Art

A liquid crystal display employing a liquid crystal panel has a problem of afterglow when displaying a moving image. One technique of resolving the problem is to convert an input video signal having an original frame frequency into a video signal whose frame frequency is higher than the original frame frequency and display the converted video signal on the display. An example of this technique is disclosed in Japanese Unexamined Patent Application Publication No. 2005-148521. This publication discloses an apparatus that converts an input video signal having a frame frequency of 60 Hz into a video signal having a frame frequency of 120 Hz and displays the converted video signal on a liquid crystal panel.

An apparatus for displaying video signals has an input source to receive video signals. The input source is, for example, a tuner incorporated in the video signal displaying apparatus, or an external device connected to the video signal displaying apparatus, such as an optical disk player and a video signal player. There are a variety of sources that supply video signals of which frame frequencies are dependent on regions and counties. Because of this, apparatuses for displaying video signals are required to receive video signals of different frame frequencies. Such requirement will further increase in the future.

When receiving video signals of different frame frequencies, multiplying the frame frequency of any one of the received video signals, and displaying the frame-frequency-multiplied video signal on a display, the video signal displaying apparatus must display the video signal in high quality by fully utilizing the capacity of the display. At the same time, the apparatus must minimize power consumption and heat generation. Even when receiving video signals of the same frame frequency, the apparatus must display a given video signal in high quality without increasing power consumption and heat generation.

### SUMMARY OF THE INVENTION

In consideration of such requirements, an object of the present invention is to provide an apparatus for and a method of displayingvideo signals, capable of receiving video signals of different frame frequencies, converting any one of the received video signals into a video signal of higher frame frequency, and displaying the video signal of higher frame frequency on a display in high quality by fully utilizing the ability of the display. Another object of the present invention is to provide an apparatus for and a method of displaying video signals, capable of displaying the video signals at low power consumption and low heat generation.

In order to accomplish the objects, a first aspect of the present invention provides an apparatus for displaying video signals, comprising an input source (23) configured to receive video signals having different frame frequencies and provide an input video signal from among the received video signals; a frame frequency detector (5) configured to detect, as a first frame frequency, the frame frequency of the input video signal; a display (10) configured to display the input video signal at a second frame frequency that is higher than the first frame frequency; a determiner (6) configured to determine the second frame frequency according to the first frame frequency; an interpolation frame generator (7) configured to generate, according to the determination made by the determiner, one or a plurality of interpolation frames to be interpolated between adjacent original frames of the input video signal; and a frame frequency converter (8) configured to convert the input video signal into a video signal having the second frame frequency by interpolating the generated interpolation frames between the original frames of the input video signal.

It is preferable that, whichever of the frame frequencies of the received video signals serves as the first frame frequency, the determiner determines as the second frame frequency a highest frame frequency that is suitable for the first frame frequency and does not exceed a maximum acceptable frame frequency of the display.

It is preferable that the determiner determines a frame frequency conversion rate for each of the frame frequencies that may serve as the first frame frequency and calculates the second frame frequency by applying the determined frame frequency conversion rate corresponding to the first frame frequency to the first frame frequency.

It is preferable that the determiner stores a table that relates each of the frame frequencies that may serve as the first frame frequency to a frame frequency conversion rate, and according to the table, determines the frame frequency conversion rate to be applied to the first frame frequency.

It is preferable that the display is a display panel having a matrix of pixel forming dots arranged in horizontal and vertical directions and that the apparatus further comprises a drive voltage controller (9) configured to apply a drive voltage to each dot of the display panel in such a way that the polarity of the drive voltage is inverted between positive and negative around a central voltage at intervals of two or more frames of the video signal having the second frame frequency.

It is preferable that the drive voltage controller alternates, in each frame of the video signal having the second frame frequency, the polarities of the drive voltages applied to the dots of the display panel between positive and negative at intervals of every dot or pixel in each of the horizontal and vertical directions of the display panel.

It is preferable that the drive voltage controller applies, in one frame of the video signal having the second frame frequency, the drive voltages to the dots of the display panel in one of the positive and negative polarities.

It is preferable that the drive voltage controller adaptively changes a polarity inversion period of the drive voltage according to the second frame frequency.

In order to accomplish the objects, a second aspect of the present invention provides a method of displaying video signals, comprising receiving video signals having different frame frequencies and providing an input video signal from among the received video signals; detecting, as a first frame frequency, the frame frequency of the input video signal: determining a second frame frequency for the input video signal according to the first frame frequency, the second frame frequency being higher than the first frame frequency; generating, according to the determined second frame frequency, one or a plurality of interpolation frames to be interpolated between adjacent original frames of the input video signal; converting the input video signal into a video signal having the second frame frequency by interpolating the generated interpolation frames between the original frames of the input video signal; and displaying the video signal having the second frame frequency on a display.

It is preferable that determining a second frame frequency for the input video signal determines as the second frame frequency a highest frame frequency that is suitable for the first frame frequency and does not exceed a maximum acceptable frame frequency of the display.

It is preferable that determining a second frame frequency for the input video signal determines a frame frequency conversion rate that is applied to the first frame frequency to calculate the second frame frequency.

It is preferable that determining a second frame frequency for the input video signal refers to a table that relates each of the frame frequencies that may serve as the first frame frequency to a frame frequency conversion rate and determines the frame frequency conversion rate to be applied to the first frame frequency.

It is preferable that the display is a display panel having a matrix of pixel forming dots arranged in horizontal and vertical directions and that displaying the video signal having the second frame frequency on a display applies a drive voltage to each dot of the display panel in such a way that the polarity of the drive voltage is inverted between positive and negative around a central voltage at intervals of two or more frames of the video signal having the second frame frequency.

It is preferable that displaying the video signal having the second frame frequency on a display alternates, in each frame of the video signal having the second frame frequency, the polarities of the drive voltages applied to the dots of the display panel between positive and negative at intervals of every dot or pixel in each of the horizontal and vertical directions of the display panel.

It is preferable that displaying the video signal having the second frame frequency on a display applies, in one frame of the video signal having the second frame frequency, the drive voltages to the dots of the display panel in one of the positive and negative polarities.

It is preferable that displaying the video signal having the second frame frequency on a display adoptively changes a polarity inversion period of the drive voltage according to the second frame frequency.

In this way, any one of the aspects of the present invention receives video signals of different frame frequencies, converts the frame frequency of a necessary one of the received video signals into a higher one, and displays the video signal of higher frame frequency on a display in high quality by fully utilizing the ability of the display at low power consumption and low heat generation.

The nature, principle and utility of the invention will become more apparent from the following detailed description when read in conjunction with the accompanying drawings.

### BRIEF DESCRIPTION OF THE DRAWINGS

In the accompanying drawings:
Fig. 1 is a block diagram showing an apparatus for displaying video signals according to an embodiment of the present invention;
Fig. 2 shows an example of a frequency conversion rate table 61 contained in a frame frequency conversion rate determiner 6 arranged in the apparatus of Fig. 1;
Fig. 3 explains the generation of interpolation frames by an interpolation frame generator 7 arranged in the apparatus of Fig. 1;
Fig. 4 explains a frame frequency conversion effect of the present invention on the blur width of a video signal;
Figs. 5A and 5B explain the polarity inversion of a drive voltage applied to a dot of a display panel 10 arranged in the apparatus of Fig. 1;
Fig. 6 shows examples of polarity patterns of drive voltages applied to dots of the display panel 10;
Fig. 7 shows an example of switching the polarity of a drive voltage between two patterns when a video signal having a frame frequency of 60 Hz is converted into one having a frame frequency of 180 Hz;
Fig. 8 shows another example of switching the polarity of a drive voltage between two patterns when a video signal having a frame frequency of 60 Hz is converted into one having a frame frequency of 180 Hz;
Fig. 9 shows an example of switching the polarity of a drive voltage between two patterns when a video signal having a frame frequency of 50 Hz is converted into one having a frame frequency of 200 Hz;
Fig. 10 shows an example of switching the polarity of a drive voltage between two patterns when a video signal having a frame frequency of 50 Hz or 60 Hz is converted into one having a frame frequency of 300 Hz; and
Fig. 11 shows an example of change in the polarity of a drive voltage applied to a dot of the display panel 10.

### DETAILED DESCRIPTION OF EMBODIMENTS

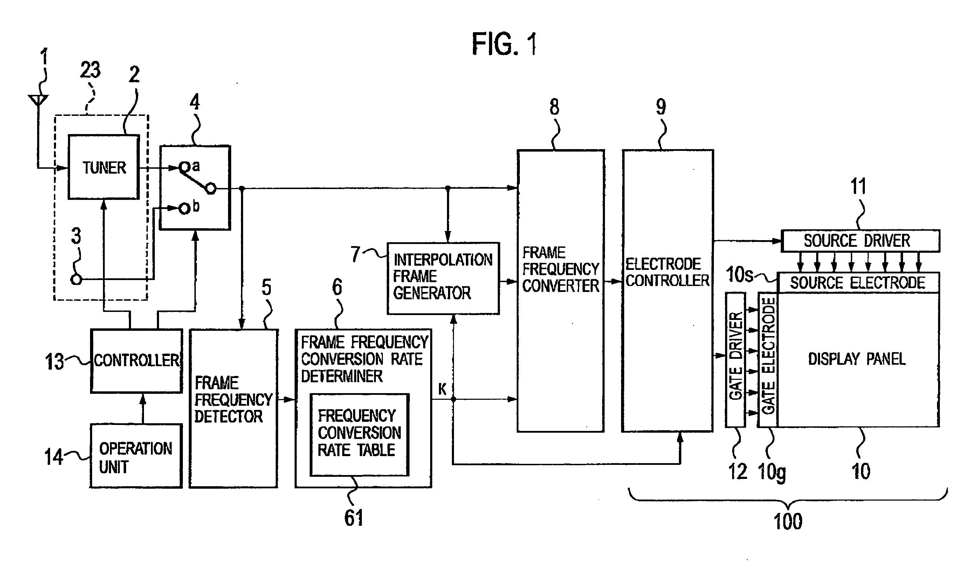

An apparatus for and a method of displaying video signals according to the present invention will be explained with reference to the accompanying drawings. Fig. 1 is a block diagram showing an apparatus for displaying video signals according to an embodiment of the present invention. In Fig. 1, an antenna 1 receives a television broadcast signal and supplies the same to a tuner 2. The tuner 2 may be an analogue tuner or a digital tuner. It may be a terrestrial-wave tuner or a satellite broadcast tuner. From the supplied signal, the tuner 2 demodulates the broadcast-wave signal of a required channel into a video signal having a predetermined frame frequency. An operation unit 14 is a set of operation buttons installed on the apparatus or a remote controller. With the operation unit 14, a user selects a desired channel, to send a channel switching signal to a controller 13. In response to the channel switching signal, the controller 13 selects the desired channel with the tuner 2.

An external input terminal 3 receives a video signal having a given frame frequency reproduced by an external device (not shown). The external device connected to the external input terminal 3 may be an external tuner, an optical disk player for playing a DVD, a BD (blue-ray disk), or the like, a video player for reproducing an image signal recorded in a semiconductor memory, a video player for receiving a video signal through wireless communication or network communication and reproducing the received video signal, or the like. The video signal from the tuner 2 is supplied to a terminal "a" of a switch 4 and the video signal from the external input terminal 3 is supplied to a terminal "b" of the switch 4.

According to the embodiment, the video signal from the tuner 2 and the video signal from the external input terminal 3 have different frame frequencies. The tuner 2 may be configured to provide a plurality of video signals having different frame frequencies. The external input terminal 3 may be configured to receive a plurality of video signals having different frame frequencies. The apparatus may be configured to have a plurality of tuners 2 or a plurality of external input terminals 3. According to the embodiment of Fig. 1, the apparatus has an input source 23 to receive a plurality of video signals having different frame frequencies. In the following explanation, the input source 23 receives a video signal having a frame frequency of 50 Hz and a video signal having a frame frequency of 60 Hz. This, however, does not limit the present invention. For example, the apparatus according to the present invention is applicable to receive video signals having frame frequencies of 24 Hz and 30 Hz that are used for blue-ray disks and digital cinema, or video signals of three or more different frame frequencies.

In response to an operation conducted with the operation unit 14 to select the tuner 2 or the external input terminal 3, the controller 13 outputs a control signal to the switch 4. In response to the control signal, the switch 4 connects the terminal a or b, to output a selected one of the video signals from the tuner 2 and external input terminal 3. The video signal output from the switch 4 is supplied to a frame frequency detector 5, an interpolation frame generator 7, and a frame frequency converter 8. The frame frequency detector 5 detects the frame frequency of the output video signal by, for example, counting intervals of a vertical synchronizing signal contained in the video signal and outputs a detected frame frequency signal to a frame frequency conversion rate determiner 6.

The frame frequency conversion rate determiner 6 stores a frame frequency conversion rate table 61 that shows a plurality of frame frequencies of video signals to be input and preset frame frequency conversion rates corresponding to the frame frequencies, respectively. Instead of the conversion rates, the table 61 may store post-conversion frame frequencies corresponding to the frame frequencies to be input. For example, the table 61 may store a multiplier of 4 for an input video signal having a frame frequency of 50 Hz and a multiplier of 3 for an input video signal having a frame frequency of 60 Hz. Instead, the table 61 may store a frame frequency of 200 Hz for the input frame frequency of 50 Hz and a frame frequency of 180 Hz for the input frame frequency of 60 Hz. In any case, the table 61 stores data to determine a frame frequency to be displayed on a display panel 10 with respect to the frame frequency of an input video signal.

The frame frequency conversion rates stored in the table 61 are preset not to exceed a maximum response speed (maximum acceptable frame frequency) of the display panel 10. The frame frequency conversion rates in the table 61 may be preset in consideration of the operational abilities of circuits in the frame frequency converter 8 and an electrode controller 9. The operational abilities of such circuits are determined by, for example, a maximum clock frequency used to operate the circuits. The frame frequency conversion rates in the table 61 may be preset in consideration of power consumption and heat generation in the apparatus in addition to the condition of not exceeding the maximum acceptable frame frequency of the display panel 10. It is preferable to preset the frame frequency conversion rates in consideration of trade-offs between an improvement in displayed image quality achieved by a frame frequency increase and an increase in the power consumption and heat generation of the apparatus caused by the same. The frame frequency conversion rates may be preset in consideration of the size of the display panel 10.

Instead of storing the frame frequency conversion rates in the table 61 beforehand, the maximum acceptable frame frequency of the display panel 10 may be stored in the frame frequency conversion rate determiner 6, so that the determiner 6 may calculate a frame frequency conversion rate for an input video signal according to the maximum acceptable frame frequency and the frame frequency of the input video signal.

The signal indicative of a frame frequency conversion rate from the frame frequency conversion rate determiner 6 is supplied to the interpolation frame generator 7 and frame frequency converter 8. According to the signal, the interpolation frame generator 7 generates interpolation frames and supplies them to the frame frequency converter 8. The details of operation of the interpolation frame generator 7 will be explained later. The frame frequency converter 8 has a memory to temporarily store original frames of the input video signal supplied from the switch 4 and the interpolation frames supplied from the interpolation frame generator 7. The frame frequency converter 8 controls the reading of the memory in such a way that one or a plurality of the interpolation frames are interpolated between two original frames of the input video signal that are temporally adjacent to each other. At this time, the frame frequency converter 8 reads the original frames and interpolation frames from the memory in such a way as to realize the frame frequency specified by the frame frequency conversion rate signal from the determiner 6.

The frame frequency converter 8 provides the electrode controller 9 with a resultant video signal of the converted frame frequency. The electrode controller 9 controls a source driver 11 and a gate driver 12. The electrode controller 9 is sometimes referred to as a timing controller. The details of operation of the electrode controller 9 will be explained later. The display panel 10 has source electrodes 10s and gate electrodes log. The source electrodes 10s are driven by the source driver 11 and the gate electrodes 10g by the gate driver 12. The display panel 10 is, for example, an active matrix liquid crystal panel that is driven by applying drive voltages between the source electrodes 10s and the gate electrodes 10g. The electrode controller 9, display panel 10, source driver 11, and gate driver 12 may be integrated into a liquid crystal panel module 100.

The display panel 10 is not limited to a liquid crystal panel. It may be, an organic electroluminescence (EL) panel, a field emission display (FED) panel, a surface-conduction electron-emitter display (SED) panel, or the like. The display panel 10 may be replaced with a Braun tube or a projection display. Each of these substitute displays needs a specific driver, and if such a display is employed, the liquid crystal panel module 100 must be replaced with another proper one.

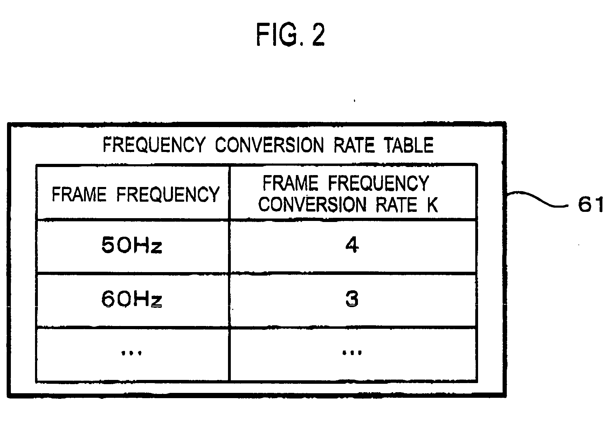

In the following explanation, an assumption is made that the display panel 10 has a maximum acceptable frame frequency of 200 Hz, the tuner 2 provides a video signal having a frame frequency of 60 Hz , and the external input terminal 3 provides a video signal having a frame frequency of 50 Hz. Fig. 2 shows an example of the frequency conversion rate table 61 contained in the frame frequency conversion rate determiner 6. In Fig. 2, the table 61 stores "4" as a frame frequency conversion rate K for the frame frequency of 50 Hz and "3" for the frame frequency of 60 Hz . If the switch 4 provides the video signal of 50 Hz, the circuits from the interpolation frame generator 7 to the electrode controller 9 operate to convert the video signal into a video signal having a frame frequency of 200 Hz and display the converted video signal on the display panel 10. If the switch 4 provides the video signal of 60 Hz, the circuits from the interpolation frame generator 7 to the electrode controller 9 operate to convert the video signal into a video signal having a frame frequency of 180 Hz and display the converted video signal on the display panel 10.

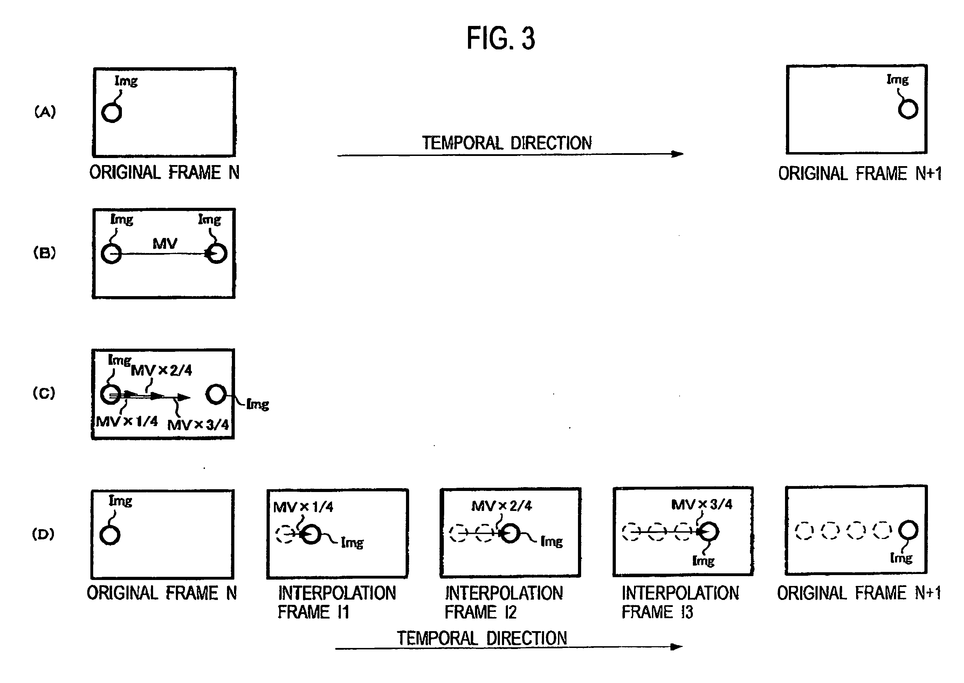

Operation of the interpolation frame generator 7 will be explained with reference to Fig. 3. In this example, the frame frequency of 50 Hz of the input video signal is multiplied by four. View (A) of Fig. 3 shows original frames of the input video signal supplied to the interpolation frame generator 7. In an original frame N, a circular image Img is at a left end of the frame, and in the next original frame N+1, the image Img has moved to a right end of the frame. View (B) of Fig. 3 shows a motion vector MV of the image Img that moves from the left end to the right end in the frames. In view (C) of Fig. 3, the interpolation frame generator 7 finds a motion vector "MVx1/4" by multiplying the motion vector MV by 1/4, a motion vector "MVx2/4" by multiplying the motion vector MV by 2/4, and a motion vector "MVx3/4" by multiplying the motion vector MV by 3/4.

In view (D) of Fig. 3, the interpolation frame generator 7 generates an interpolation frame I1 by moving the image Img in the original frame N according to the motion vector MVx1/4, an interpolation frame I2 by moving the image Img in the original frame N according to the motion vector MVx2, and an interpolation frame I3 by moving the image Img in the original frame N according to the motion vector MVx3/4. The interpolation frames I1 to I3 are inserted between the original frames N and N+1.

A motion vector MV may be obtained from every adjacent frames of the input video signal. To reduce calculation load, the motion vector MV may be obtained from predetermined frames in GOP (group of pictures) of the input video signal. A frame-to-frame motion vector may be obtained from an average of motion vectors of an encoding object such as a maoro-block in frames. Alternatively, a frame-to-frame motion vector may be obtained from the motion vector of a representative encoding object such as a representative macro-block in frames. It is also possible to obtain a frame-to-frame motion vector from motion vectors contained in MPEG.

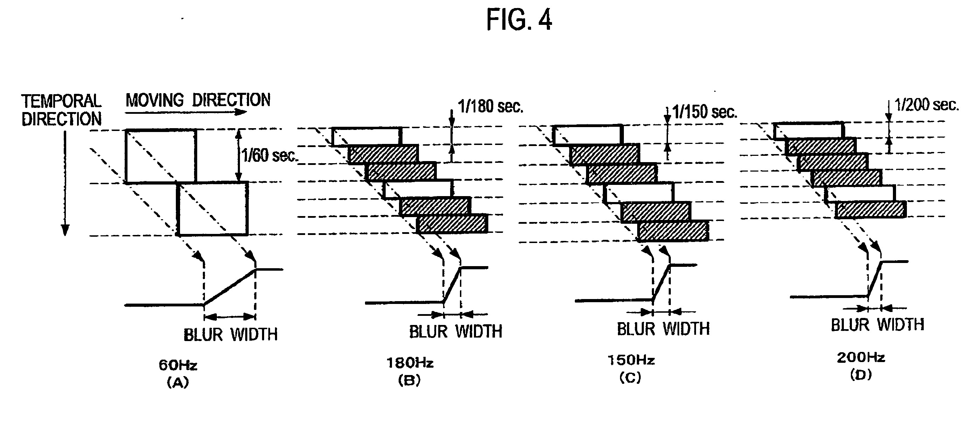

Fig. 4 explains effect of the frame frequency conversion according to the embodiment. Fig. 4 schematically shows a horizontally extended segment image having a predetermined length displayed on the display panel 10. The segment image is moved in a horizontal direction within one line (row) of the display panel 10. The image is held in the line for a hold time of liquid crystals of the display panel 10. View (A) of Fig. 4 shows the segment image displayed on the display panel 10 with a video signal having a frame frequency of 60 Hz without changing the frame frequency. In this case, the segment image is held for 1/60 seconds in each frame, and therefore, is viewed as if it is extended in a temporal direction as shown in the view (A) of Fig. 4. The view (A) of Fig. 4 involves a large blur width when the segment image is horizontally moved.

View (B) of Fig. 4 shows the segment image displayed with a video signal having a frame frequency of 180 Hz converted from the video signal of 60 Hz . In views (B) to (D) of Fig. 4, a hatched rectangle indicates the segment image in an interpolation frame. In the view (B) of Fig. 4, a blur width is remarkably small compared with that of the view (A) of Fig. 4. The view (C) of Fig. 4 shows the segment image displayed on the display panel 10 with a video signal having a frame frequency of 150 Hz converted from a video signal having a frame frequency of 50 Hz. The view (D) of Fig. 4 shows the segment image displayed on the display panel 10 with a video signal having a frame frequency of 200 Hz converted from the video signal of 50 Hz. Comparing the views (C) and (D) of Fig. 4, it is understood that the blur width becomes smaller as the frame frequency increases higher. Namely, it is preferable for the video signal of 50 Hz to multiply it by 4 instead of 3 into one having a frame frequency of 200 Hz instead of 150 Hz.

In this way, the embodiment is configured to convert one of received video signals having different frame frequencies into a video signal having a maximum frame frequency not exceeding the maximum acceptable frame frequency of the display panel 10. The embodiment is also configured to minimize differences among the frame frequencies of converted video signals.

If the display panel 10 has a maximum acceptable frame frequency of 250 Hz, the video signal of 50 Hz in frame frequency will be converted into a video signal having a frame frequency of 250 Hz by applying "5" as the frame frequency conversion rate K thereto. Similarly, the video signal of 60 Hz in frame frequency will be converted into a video signal having a frame frequency of 240 Hz by applying "4" as the frame frequency conversion rate K thereto. In this case, a frame frequency difference between the converted video signals is 10 Hz. This is preferable in terms of the designing of the apparatus.

If the display panel 10 has a maximum acceptable frame frequency of 300 Hz, the video signal of 50 Hz will be converted into a video signal having a frame frequency of 300 Hz by applying "6" as the frame frequency conversion rate K thereto. Similarly, the video signal of 60 Hz will be converted into a video signal having a frame frequency of 300 Hz by applying "5" as the frame frequency conversion rate K thereto. In this case, there is no frame frequency difference between the converted video signals. This is more preferable in terms of the designing of the apparatus. In this way, one characteristic of the embodiment is to convert the frame frequency of a given one of input video signals having different frame frequencies into a frame frequency that is optimum for the given video signal and display the converted video signal on the display panel 10.

Next, operation of the electrode controller 9 will be explained. To display a video signal on the display panel 1.0, the source driver 11 applies drive voltages to the source electrodes 10s and the gate driver 12 applies drive voltages to the gate electrodes 10g. The drive voltages or source voltages applied to the source electrodes 10s take various values depending on brightness values (R, G, and B levels) to be displayed with the pixels of the display panel 10. The drive voltages (gate voltages) applied to the gate electrodes 10g take two values, i.e., an ON value for a line (row) that contains thin film transistors (TFTs) to be written and an OFF value for each line that contains TFTs holding written data. Lines (rows) of the display panel 10 are sequentially selected one after another from a top line to a bottom line and the ON gate voltage is applied to the selected line through a corresponding one of the gate electrodes 10g. At the same time, a source voltage is applied to each pixel in the selected line through the source electrodes 10s according to a brightness value specified by a video signal (pixel signal), thereby displaying the video signal on the display panel 10 frame by frame.

If the display panel 10 is a liquid crystal panel, the polarity of a drive voltage applied to each pixel of the display panel 10 is inverted between positive (+) and negative (-) at predetermined intervals without fixing the polarity. If the direction of an electric field applied to liquid crystal material is fixed, charge to liquid crystal molecules is biased to cause burn-in on the display panel 10 and deteriorate the liquid crystal material. To prevent this, the electrode controller 9 according to the embodiment supplies electrode control signals to the source driver 11 and gate driver 12 so that each pixel of the display panel 10 may alternately receive positive and negative voltage values corresponding to a brightness value to be displayed with the pixel. The electrode control signal provided by the electrode controller 9 includes a polarity inversion period control signal to control the polarity inversion period of a drive voltage applied to each pixel.

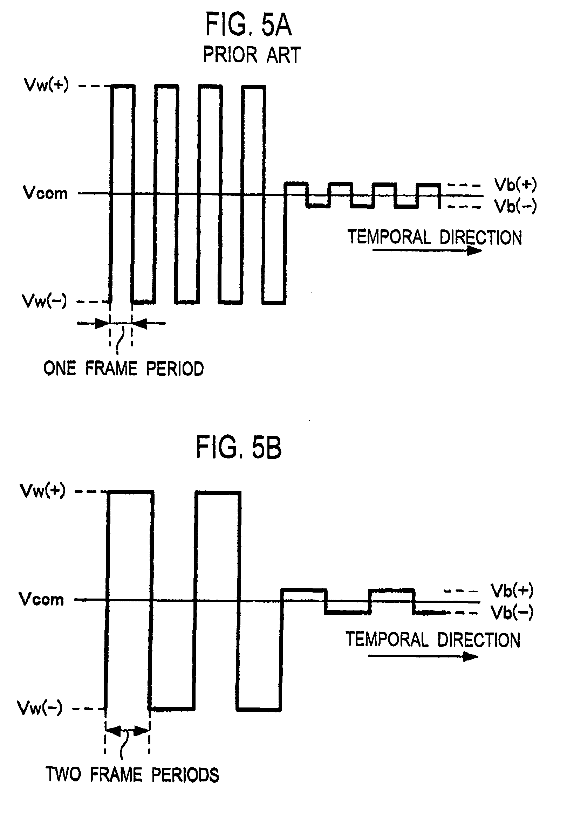

Figs. 5A and 5B explain the polarity of a drive voltage applied to a pixel of the display panel 10. Every pixel of the display panel 10 is connected to a common electrode that receives a common voltage Vcom. Fig. 5A shows a standard (related art) technique of alternating the polarity of a drive voltage every frame. In Fig. 5A, a pixel receives one of positive (+) and negative (-) voltages that are positive and negative with respect to the common voltage Vcom serving as a central voltage. The video signal shown in Figs. 5A and 5B includes white and black voltage values. To display white, the polarity of the drive voltage applied to the pixel is inverted between a positive voltage Vw(+) and a negative voltage Vw(-), and to display black, between a positive voltage Vb(+) and a negative voltage Vb(-). To display gray that is between white and black, the drive voltage applied to the pixel is inverted between a positive voltage in the range of Vw(+) to Vb(+) and a negative voltage in the range of Vw(-) to Vb(-). According to the related art shown in Fig. 5A, the polarity of a drive voltage applied to a pixel is inverted frame by frame.

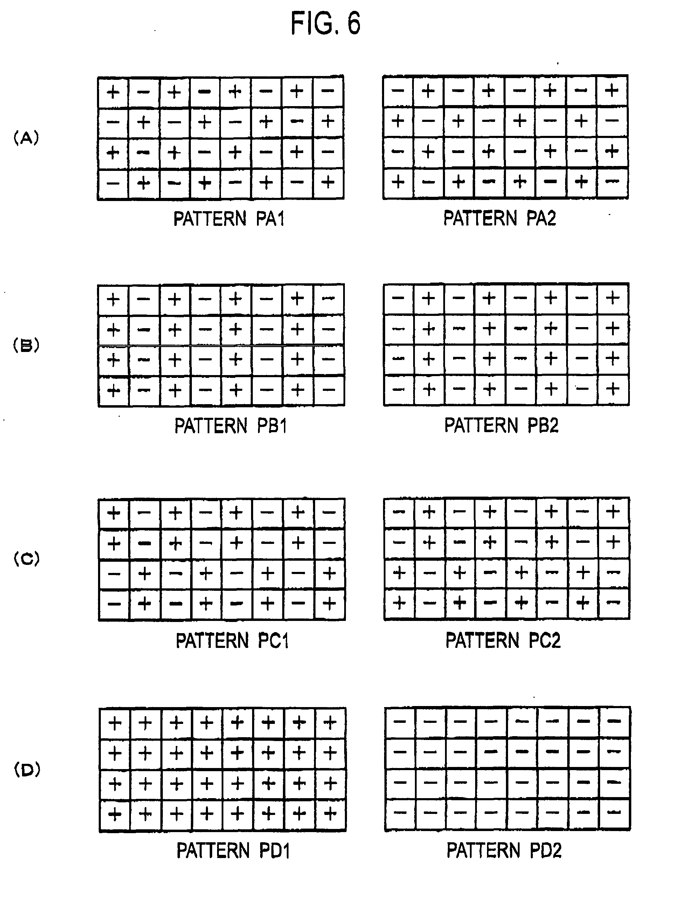

Polarity inverting patterns of drive voltages applied to pixels of the display panel 10 achieved by the source driver 11 and gate driver 12 according to polarity inversion period control signals will be explained with reference to Fig. 6. Views (A) to (D) shown in Fig. 6 are examples of patterns of the polarities of drive voltages applied to dots of the display panel 10, the dots forming pixels of the display panel 10. For the sake of simplicity, each pattern shown in Fig. 6 represents a partial array of dots (pixels) on the display panel 10. Three dots, i.e., R, G, and B dots form a pixel of the display panel 10. The view (A) of Fig. 6 shows patterns PA1 and PA2 in which the polarities of drive voltages applied to the dots alternate between positive (+) and negative (-) dot by dot in every horizontal line (row) and vertical line (column). The pattern PA2 is formed by inverting the pattern PA1. The view (B) of Fig. 6 shows patterns PB1 and PB2 in which the polarities of drive voltages applied to the dots alternate between positive (+) and negative (-) dot by dot in each row in such a way that each column shows the same polarity. The pattern PB2 is formed by inverting the pattern PB1.

The view (C) of Fig. 6 shows patterns PC1 and PC2 in which the polarities of drive voltages applied to the dots alternate between positive (+) and negative (-) dot by dot in each row and at intervals of two dots in each column. The pattern PC2 is formed by inverting the pattern PC1. The view (D) of Fig. 6 shows a pattern PD1 in which the polarities of drive voltages applied to the dots are entirely positive (+) and a pattern PD2 in which the polarities of drive voltages applied to the dots are entirely negative (-). Instead of setting the polarities of drive voltages dot by dot, it is possible to set them pixel by pixel so that dots in the same pixel may receive drive voltages of the same polarity.

The patterns shown in the view (A) of Fig. 6 involve a short polarity inversion period, i.e., a high inversion frequency, to increase power consumption. The patterns of the view (A), however, hardly cause flicker and can display high-quality images. The patterns shown in the view (D) of Fig. 6 cause flicker at low frame frequencies. The patterns of the view (D), however, realize lowest power consumption. The embodiment may employ any of the patterns shown in the views (A) to (D) of Fig. 6. Preferable patterns are those shown in the views (A) and (D) of Fig. 6. In the following explanation, the patterns PA1, PB1, PC1, and PD1 are collectively referred to as a pattern P1 and the patterns PA2, PB2, PC2, and PD2 as a pattern P2. Switching the patterns P1 and P2 from one to another according to the embodiment will be explained.

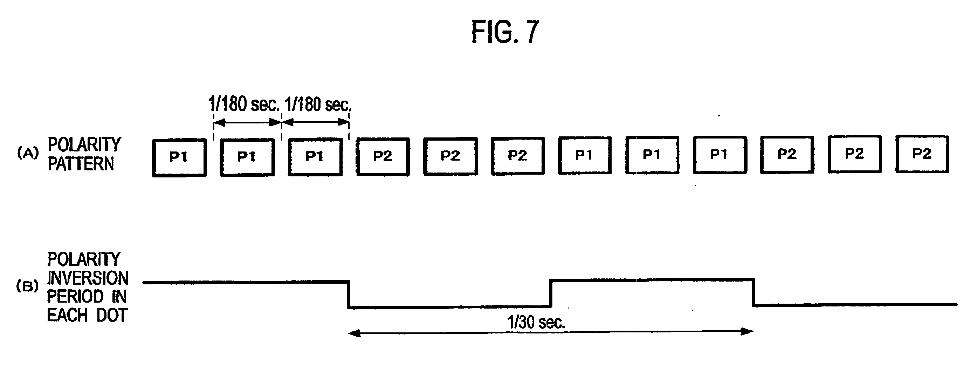

Fig. 7 shows an example of switching the patterns P1 and P2 from one to another when an input video signal has a frame frequency of 60 Hz and is converted into a video signal having a frame frequency of 180 Hz. As mentioned above, the related art switches the patterns P1 and P2 from one tow another every frame, and therefore, a drive voltage applied to each pixel or dot is inverted frame by frame. On the other hand, the embodiment switches the patterns P1 and P2 at intervals of a plurality of frames instead of switching them every frame. The example shown in Fig. 7 switches the patterns P1 and P2 from one to another every three frames. This means that the polarity inversion period of a drive voltage applied to an optional dot in the displaypanel 10 is 1/30 seconds (a frequency of 30 Hz).

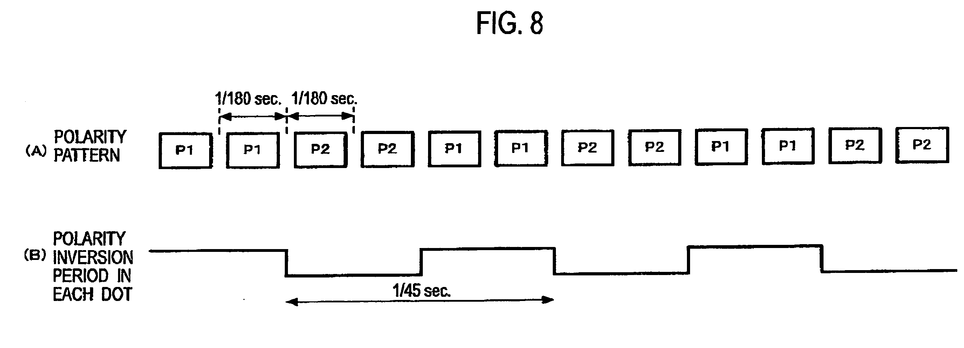

Fig. 8 shows another example of switching the patterns P1 and P2 from one to another when an input video signal has a frame frequency of 60 Hz and is converted into a video signal having a frame frequency of 180 Hz. This example switches the patterns P1 and P2 from one to another every two frames. This means that the polarity inversion period of a drive voltage applied to an optional dot in the display panel 10 is 1/45 seconds (a frequency of 45 Hz). If the pattern switching technique of Fig. 7 causes visible flicker, the pattern switching technique of Fig. 8 may be employed.

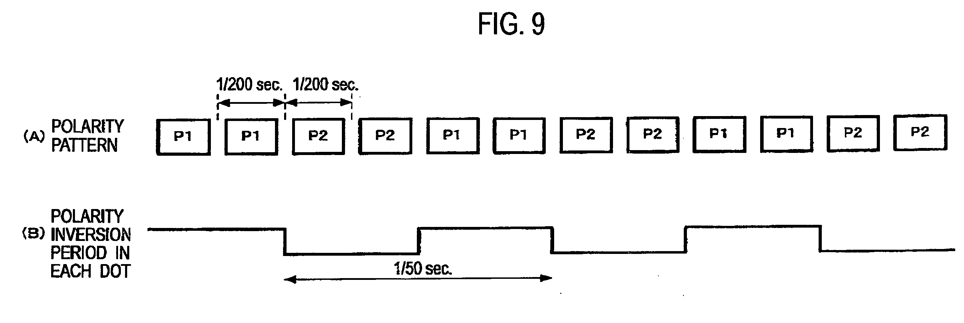

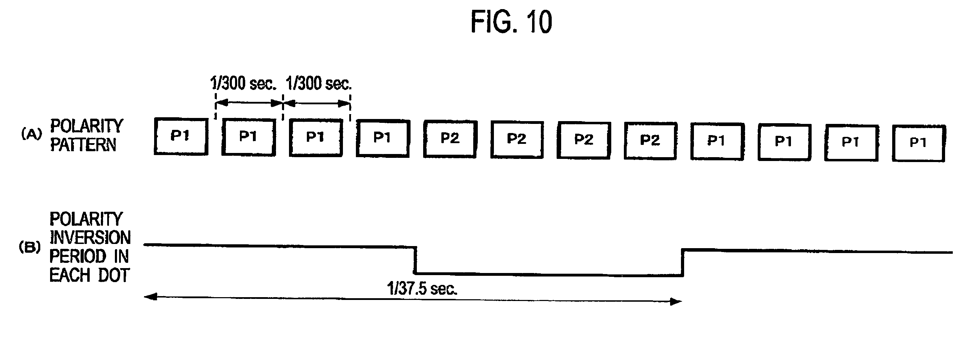

Fig. 9 shows an example of switching the patterns P1 and P2 from one to another when an input video signal has a frame frequency of 50 Hz and is converted into a video signal having a frame frequency of 200 Hz. This example switches the patterns P1 and P2 from one to another every two frames. This means that the polarity inversion period of a drive voltage applied to an optional dot in the display panel 10 is 1/50 seconds (a frequency of 50 Hz). Fig. 10 shows an example of switching the patterns P1 and P2 from one to another when an input video signal has a frame frequency of 50 Hz or 60 Hz and is converted into a video signal having a frame frequency of 300 Hz. This example switches the patterns P1 and P2 from one to another every four frames. This means that the polarity inversion period of a drive voltage applied to an optional dot in the display panel 10 is 1/37.5 seconds (a frequency of 37.5 Hz).

In this way, another characteristic of the embodiment is to increase the frame frequency of an input video signal and switch the patterns P1 andP2 from one to another at intervals of a plurality of frames. Increasing the frame frequency of an input video signal results in making flicker hardly visible even if the patterns P1 and P2 are not switched every frame.

Switching the patterns P1 and P2 at intervals of a plurality of frames results in reducing power consumption. Switching intervals of the patterns P1 and P2, i.e. , a polarity inversion frequency must properly be set so that flicker becomes invisible. To make flicker invisible, it is preferable to set the polarity inversion frequency higher than 30 Hz. Namely, it is preferable to set the frame frequency conversion rate K to 3 or larger. The polarity inversion frequency may be fixed, or a plurality of frequencies may be selected by the user.

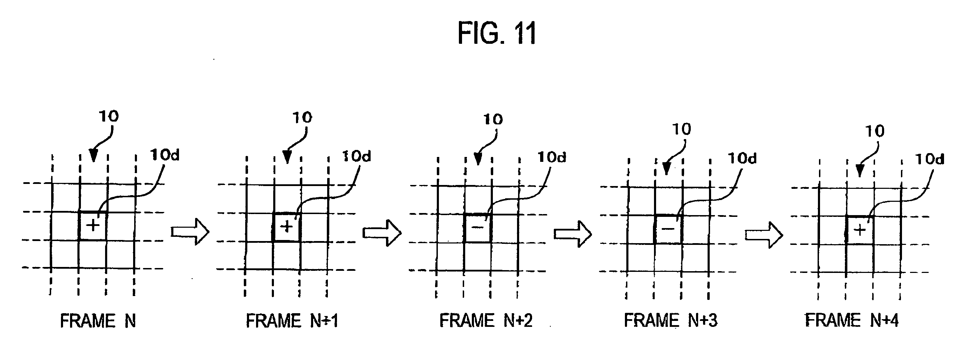

Fig. 11 shows an example of change in the polarity of a drive voltage applied to an optional dot in the display panel 10. The example of Fig. 11 switches the patterns P1 and P2 from one to another every two frames like the examples of Figs. 8 and 9. Namely, the drive voltage applied to the dot is positive (+) in frames N and N+1 and is negative (-) in frames N+2 and N+3. These are repeated so that the drive voltage may invert the polarity thereof every two frames. In the case of a video signal involving only white and black like the video signal shown in Fig. 5A, the polarity of a drive voltage applied to a pixel in the display panel 10 will be inverted as shown in Fig. 5B.

When the patterns PA1 and PA2 shown in the view (A) of Fig. 6 are employed, the electrode controller 9 alternates positive and negative voltages dot by dot in horizontal and vertical directions of the display panel 10 in each frame of a video signal provided by the frame frequency converter 8. When the patterns PD1 and PD2 shown in the view (D) of Fig. 6 are employed, the electrode controller 9 applies positive voltages or negative voltages to all dots of the display panel 10 in each frame.

In this way, the electrode controller 9 serves as a drive voltage controller that applies a drive voltage to each dot of the display panel 10 in such a way that the polarity of the drive voltage is inverted between positive and negative values around a common voltage Vcom serving as a central voltage at intervals of two or more frames of a video signal provided by the frame frequency converter 8. As shown in Fig. 1, the electrode controller 9 receives the frame frequency conversion rate K. It is preferable that the rate K or the polarity inversion period of a drive voltage is adoptively changed according to the frame frequency of a video signal to be displayed on the display panel 10. According to the embodiment, the rate K is supplied to the electrode controller 9 so that the electrode controller 9 may adoptively change the polarity inversion period of a drive signal accordingly. Instead, the electrode controller 9 may adoptively change the polarity inversion period of a drive voltage according to the frame frequency of a video signal provided by the frame frequency converter 8.

As explained above, the apparatus for displaying video signals according to the embodiment detects, as a first frame frequency, the frame frequency of an input video signal, determines a second frame frequency for a video signal to be displayed on a display (display panel 10) according to the first frame frequency, generates interpolation frames necessary for forming the video signal of the second frame frequency, converts the input video signal of first frame frequency into the video signal of second frame frequency by interpolating the interpolation frames between original frames of the input video signal, and displays the converted video signal on the display. The apparatus, therefore, can sufficiently utilize the ability of the display to display any one of video signals having different frame frequencies in high quality.

If the display is a display panel having a matrix of dots arranged in horizontal and vertical directions, the apparatus inverts the polarity of a drive voltage applied to each dot of the display panel between positive and negative around a central voltage at intervals of two or more frames of a video signal to be displayed. With this technique, the apparatus can prevent burn-in of the display panel and material deterioration of the display panel. Compared with the related art that inverts the polarity of a drive voltage applied to each dot at intervals of every frame, the embodiment can reduce power consumption and heat generation. The embodiment adoptively changes the polarity inversion period of a drive voltage applied to each dot according to the frame frequency (second frame frequency) of a converted video signal, to optimize the polarity inversion period.

According to the embodiment, the input source 23 of the apparatus receives video signals having different frame frequencies and the apparatus inverts the polarity of a drive voltage applied to each dot of the display panel 10 at intervals of a plurality of frames. If the input source 23 is configured to receive video signals of the same frame frequency, the apparatus also inverts the polarity of a drive voltage applied to each dot of the display panel 10 at intervals of a plurality of frames, to realize the effect of the present invention. When the input source 23 is configured to receive video signals of the same frame frequency, the frame frequency detector 5 and frame frequency conversion rate determiner 6 can be omitted.

With the configuration of receiving video signals of different frame frequencies or the configuration of receiving video signals of the same frame frequency, the apparatus of the embodiment converts an input video signal having a first frame frequency into a video signal having a second frame frequency that is K (an integer equal to or larger than 2) times higher than the first frame frequency and displays the converted video signal in high quality without flicker. If the input video signal has a frame frequency of 50 Hz or 60 Hz, it is preferable to apply "3" or larger as the frame frequency conversion rate K to the input video signal so that the converted video signal may have a frame frequency three times as high as the original frame frequency or higher, to make flicker invisible.

The present invention is not limited to the above-mentioned embodiment or examples. Without departing from the spirit of the present invention, the present invention can be modified in various ways.

## Claims

1. An apparatus for displaying video signals, comprising:
an input source (23) configured to receive video signals having different frame frequencies and provide an input video signal from among the received video signals;
a frame frequency detector (5) configured to detect, as a first frame frequency, the frame frequency of the input video signal;
a display (10) configured to display the input video signal at a second frame frequency that is higher than the first frame frequency;
a determiner (6) configured to determine the second frame frequency according to the first frame frequency;
an interpolation frame generator (7) configured to generate, according to the determination made by the determiner, one or a plurality of interpolation frames to be interpolated between adjacent original frames of the input video signal; and
a frame frequency converter (8) configured to convert the input video signal into a video signal having the second frame frequency by interpolating the generated interpolation frames between the original frames of the input video signal.

2. The apparatus of claim 1, wherein:
whichever of the frame frequencies of the received video signals serves as the first frame frequency, the determiner (6) determines as the second frame frequency a highest frame frequency that is suitable for the first frame frequency and does not exceed a maximum acceptable frame frequency of the display.

3. The apparatus of any one of claims 1 and 2, wherein:
the determiner (6) determines a frame frequency conversion rate for each of the frame frequencies that may serve as the first frame frequency and calculates the second frame frequency by applying the determined frame frequency conversion rate corresponding to the first frame frequency to the first frame frequency.

4. The apparatus of claim 3, wherein:
the determiner (6) stores a table that relates each of the frame frequencies that may serve as the first frame frequency to a frame frequency conversion rate, and according to the table, determines the frame frequency conversion rate to be applied to the first frame frequency.

5. The apparatus of any one of claims 1 to 4, wherein:
the display (10) is a display panel having a matrix of pixel forming dots arranged in horizontal and vertical directions; and
the apparatus further comprises a drive voltage controller (9) configured to apply a drive voltage to each dot of the display panel in such a way that the polarity of the drive voltage is inverted between positive and negative around a central voltage at intervals of two or more frames of the video signal having the second frame frequency.

6. The apparatus of claim 5, wherein:
the drive voltage controller (9) alternates, in each frame of the video signal having the second frame frequency, the polarities of the drive voltages applied to the dots of the display panel between positive and negative at intervals of every dot or pixel in each of the horizontal and vertical directions of the display panel.

7. The apparatus of claim 5, wherein:
the drive voltage controller (9) applies, in one frame of the video signal having the second frame frequency, the drive voltages to the dots of the display panel in one of the positive and negative polarities.

8. The apparatus of claim 5, wherein:
the drive voltage controller (9) adaptively changes a polarity inversion period of the drive voltage according to the second frame frequency.

9. A method of displaying video signals, comprising:
receiving video signals having different frame frequencies and providing an input video signal from among the received video signals;
detecting, as a first frame frequency, the frame frequency of the input video signal;
determining a second frame frequency for the input video signal according to the first frame frequency, the second frame frequency being higher than the first frame frequency;
generating, according to the determined second frame frequency, one or a plurality of interpolation frames to be interpolated between adjacent original frames of the input video signal;
converting the input video signal into a video signal having the second frame frequency by interpolating the generated interpolation frames between the original frames of the input video signal; and
displaying the video signal having the second frame frequency on a display.

10. The method of claim 9, wherein:
determining a second frame frequency for the input video signal determines as the second frame frequency a highest frame frequency that is suitable for the first frame frequency and does not exceed a maximum acceptable frame frequency of the display.

11. The method of any one of claims 9 and 10, wherein :
determining a second frame frequency for the input video signal determines a frame frequency conversion rate that is applied to the first frame frequency to calculate the second frame frequency.

12. The method of claim 11, wherein:
determining a second frame frequency for the input video signal refers to a table that relates each of the frame frequencies that may serve as the first frame frequency to a frame frequency conversion rate and determines the frame frequency conversion rate to be applied to the first frame frequency.

13. The method of any one of claims 9 to 12, wherein:
the display is a display panel having a matrix of pixel forming dots arranged in horizontal and vertical directions; and
displaying the video signal having the second frame frequency on a display applies a drive voltage to each dot of the display panel in such a way that the polarity of the drive voltage is inverted between positive and negative around a central voltage at intervals of two or more frames of the video signal having the second frame frequency.

14. The method of claim 13, wherein;
displaying the video signal having the second frame frequency on a display alternates, in each frame of the video signal having the second frame frequency, the polarities of the drive voltages applied to the dots of the display panel between positive and negative at intervals of every dot or pixel in each of the horizontal and vertical directions of the display panel.

15. The method of claim 13, wherein:
displaying the video signal having the second frame frequency on a display applies, in one frame of the video signal having the second frame frequency, the drive voltages to the dots of the display panel in one of the positive and negative polarities.

16. The method of claim 13, wherein:
displaying the video signal having the second frame frequency on a display adaptively changes a polarity inversion period of the drive voltage according to the second frame frequency.
